# EUROPEAN PATENT APPLICATION

(11) **EP 2 740 764 A1**
(43) Date of publication of application: **11.06.2014**
(21) Application number: 13748888.8
(22) Date of filing: 22.01.2013
(51) Int. Cl.: C08L 33/04, C08K 5/101

(54) **(METH)ACRYLATE RESIN COMPOSITION AND CURED PRODUCT OF SAME**

(30) Priority: 13.02.2012 JP 2012028412
(71) Applicant: Panasonic Corporation, Kadoma-shi, Osaka 571-8501 (JP)
(72) Inventor: OGURA, Tomoko, Chuo-ku, Osaka 540-6207 (JP); IKOMA, Yoshimitsu, Chuo-ku, Osaka 540-6207 (JP); SAITO, Eiichiro, Chuo-ku, Osaka 540-6207 (JP)
(74) Representative: Müller-Boré & Partner Patentanwälte PartG mbB
(86) International application number: PCT/JP2013/000282
(87) International publication number: WO 2013/121697

(57) **Abstract**

A (meth)acrylate resin composition of the present invention contains: a (meth)acrylic resin composition (A) containing a (meth)acrylic acid ester and a poly(meth)acrylic acid ester; and a crosslinking agent (B) containing a bifunctional (meth)acrylic monomer (C) represented by chemical formula 1 and a polyfunctional unsaturated ester compound (D) containing three or more radically polymerizable functional groups. The bifunctional (meth)acrylic monomer (C) is contained in an amount of 2 to 25 parts by mass and the polyfunctional unsaturated ester compound containing three or more radically polymerizable functional groups is contained in an amount of 0.1 to 5 parts by mass, based on 100 parts by mass of the (meth)acrylic resin composition (A).

## Description

### TECHNICAL FIELD

The present invention relates to a (meth)acrylate resin composition capable of being suitably used as substitutes for glass plates such as vehicular or architectural windowpanes and covers for solar cell panels, and a cured product of the same.

### BACKGROUND ART

Conventionally, a (meth)acrylate resin typified by polymethyl methacrylate (PMMA) or the like is used as a raw material for taking advantage of excellent properties such as transparency, weather resistance, surface hardness, and chemical resistance to obtain various kinds of molding products. However, since the (meth)acrylate resin has comparatively low impact resistance, the use of the (meth)acrylate resin may be restricted in fields requiring impact property.

As a technique of improving the impact property of the (meth)acrylate resin, for example, Japanese Unexamined Patent Application Publication No. 09-059472 proposes addition of a thermoplastic polymer and a (meth)acrylic acid ester compound having a long alkyl chain length, or addition of acrylic rubber or the like.

### SUMMARY OF THE INVENTION

However, although the impact property of the (meth)acrylate resin is improved when the thermoplastic polymer is added to the (meth)acrylate resin as described above, the viscosity of the (meth)acrylate resin is increased, which may largely decrease the moldability of the (meth)acrylate resin. Although the impact property of the (meth)acrylate resin is improved since flexibility is applied to the (meth)acrylate resin when the long chain alkyl group is introduced into the (meth)acrylate resin, the heat resistance of the (meth)acrylate resin may be decreased. Furthermore, when rubber such as the acrylic rubber is blended, a decrease in heat resistance and a decrease in strength such as bending strength are disadvantageously caused, after all.

The present invention has been accomplished in view of the problems, and an object of the present invention is to provide a (meth)acrylate resin composition capable of applying high impact property to a molding product while maintaining excellent heat resistance and bending property (bending strength), and a cured product of the same.

A (meth)acrylate resin composition according to the present invention contains: a (meth)acrylic resin composition (A) containing a (meth)acrylic acid ester and a poly(meth)acrylic acid ester; and a crosslinking agent (B) containing a bifunctional (meth)acrylic monomer (C) represented by the following chemical formula 1 and a polyfunctional unsaturated ester compound (D) containing three or more radically polymerizable functional groups. The (meth)acrylate resin composition contains the bifunctional (meth)acrylic monomer (C) in an amount of 2 to 25 parts by mass and the polyfunctional unsaturated ester compound (D) containing three or more radically polymerizable functional groups in an amount of 0.1 to 5 parts by mass, based on 100 parts by mass of the (meth)acrylic resin composition (A). 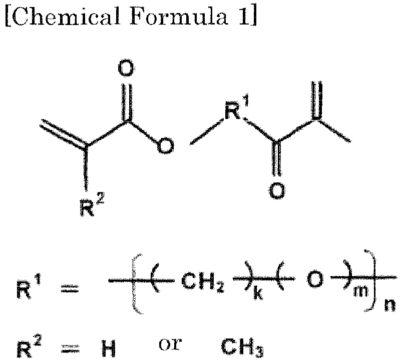 wherein n and k are each integers with nxk being 10 or more and 30 or less, and m is 0 or 1.

For the (meth)acrylate resin composition according to the present invention, it is preferable that the (meth)acrylic acid ester is a monofunctional unsaturated (meth)acrylic acid ester, and the poly(meth)acrylic acid ester contains the monofunctional unsaturated (meth)acrylic acid ester as a structural unit.

A cured product of the present invention is obtained through a step of curing the (meth)acrylate resin composition.

The (meth)acrylate resin composition according to the present invention contains the specific bifunctional (meth)acrylic monomer (C) as a crosslinking agent. Therefore, high impact property can be applied to a molded body or the like obtained from the (meth)acrylate resin composition while excellent heat resistance and bending property (bending strength) are maintained.

Since the cured product of the present invention is obtained through the step of curing the (meth)acrylate resin composition, the cured product has high impact property while maintaining excellent heat resistance and bending property (bending strength).

### DESCRIPTION OF EMBODIMENTS

Hereinafter, embodiments of the present invention will be described.

A (meth)acrylate resin composition of the present invention contains a (meth)acrylic resin composition (A) and a crosslinking agent (B). The (meth)acrylic resin composition (A) contains a (meth)acrylic acid ester and a poly(meth)acrylic acid ester. The crosslinking agent (B) contains at least a bifunctional (meth)acrylic monomer (C) represented by chemical formula 1 and a polyfunctional unsaturated ester compound (D) containing three or more radically polymerizable functional groups. For the (meth)acrylate resin composition of the present invention, following will be described about the (meth)acrylic resin composition (A), the crosslinking agent (B), the bifunctional (meth)acrylic monomer (C), and the polyfunctional unsaturated ester compound (D) containing three or more radically polymerizable functional groups. In the present invention, "(meth)acrylate" denotes either acrylate or methacrylate. For example, the "(meth)acrylic acid ester" denotes either an acrylic acid ester or a methacrylic acid ester.

The (meth)acrylic resin composition (A) contains the (meth)acrylic acid ester and the poly(meth)acrylic acid ester as described above.

The (meth)acrylate resin composition of the present invention is prepared so that the (meth)acrylate resin composition serves as a base material in a molded body obtained by curing and molding the (meth)acrylate resin composition.

Examples of the (meth)acrylic acid ester include methyl(meth)acrylate, ethyl(meth)acrylate, propyl(meth)acrylate, isopropyl(meth)acrylate, n-butyl(meth)acrylate, iso-butyl(meth)acrylate, tert-butyl(meth)acrylate, 2-ethylhexyl(meth)acrylate, 2-hydroxyethyl(meth)acrylate, 2-hydroxypropyl(meth)acrylate, 3-hydroxypropyl(meth)acrylate, octyl(meth)acrylate, lauryl(meth)acrylate, stearyl(meth)acrylate, glycidyl(meth)acrylate, phenyl(meth)acrylate, phenoxy(meth)acrylate, 4-t-butyl cyclohexyl(meth)acrylate, phenoxy polyethylene glycol(meth)acrylate, dicyclopentenyloxyethyl(meth)acrylate, tricyclodecyl(meth)acrylate, phenoxyethyl(meth)acrylate, adamantyl(meth)acrylate, oxetane(meth)acrylate, γ-butyrolactone(meth)acrylate, isobornyl(meth)acrylate, dicyclopentenyl(meth)acrylate, and tetrahydrofurfuryl(meth)acrylate. The exemplified (meth)acrylic acid esters may be used alone or in combination of two or more kinds.

The exemplified monofunctional unsaturated (meth)acrylic acid esters are preferably used as the (meth)acrylic acid ester. For this reason, in the aspect of the present invention, it is preferable that the (meth)acrylic acid ester preferably contains one kind of the monofunctional unsaturated (meth)acrylic acid esters, or preferably contains at least two kinds of the monofunctional unsaturated (meth)acrylic acid esters. Herein, the monofunctional unsaturated (meth)acrylic acid ester means a (meth)acrylic acid ester having a (meth)acryl group, that is, a vinyl group in the molecular structure of the monofunctional unsaturated (meth)acrylic acid ester.

Among them, the (meth)acrylate resin composition according to the present invention preferably contains the monofunctional unsaturated (meth)acrylic acid ester, and more preferably contains methyl methacrylate (hereinafter, may be abbreviated as MMA) as the (meth)acrylic acid ester.

When the (meth)acrylic acid ester is the monofunctional unsaturated (meth)acrylic acid ester, a cured product obtained from the (meth)acrylate resin composition has excellent impact resistance. Furthermore, the cured product prevents the degradation of heat resistance and bending strength, and has excellent curability.

When the (meth)acrylic acid ester is MMA, particularly, a cured product obtained from the (meth)acrylate resin composition has excellent impact resistance, prevents the degradation of heat resistance and bending strength, and has excellent curability.

The (meth)acrylic resin composition (A) contains the (meth)acrylic acid ester and the poly(meth)acrylic acid ester as a main component. The main component refers to a component contained in the (meth)acrylic resin composition (A). In this case, the main component is preferably contained in an amount of 80% by mass or more, and more preferably 90% by mass or more, based on the total mass of the (meth)acrylic resin composition (A). The main component may be contained in an amount of 100% by mass or less based on the total mass of the (meth)acrylic resin composition (A).

Thus, the (meth)acrylic resin composition (A) contains the main component containing the (meth)acrylic acid ester and the poly(meth)acrylic acid ester, in an amount of 80% by mass or more, and thereby the transparency of the cured product and molded body obtained from the methacrylic resin composition of the present invention can be secured.

It is possible to contain a polymerizable monomer other than the (meth)acrylic acid ester as long as the polymerizable monomer does not inhibit the effect of the present invention. Examples of the polymerizable monomer other than the (meth)acrylic acid ester include styrene, α-methylstyrene, vinyl acetate, and acrylamide.

Herein, the poly(meth)acrylic acid ester is a polymer obtained by polymerizing a (meth)acrylic acid ester monomer. In this case, the (meth)acrylic acid ester monomer may be the same as the exemplified (meth)acrylic acid ester. The poly(meth)acrylic acid ester may be either a homopolymer composed of one kind of the (meth)acrylic acid ester monomer or a copolymer composed of two kinds of the(meth)acrylic acid ester monomers. The poly(meth)acrylic acid ester may be either a crosslinked polymer or a non-crosslinked polymer. Furthermore, when the poly(meth)acrylic acid ester is a copolymer, the poly(meth)acrylic acid ester may be any polymer of a random copolymer, a block copolymer, an alternating copolymer, and a graft copolymer. The poly(meth)acrylic acid ester may contain a monomer other than the (meth)acrylic acid ester monomer as a structural unit as long as the monomer other than the (meth)acrylic acid ester monomer does not inhibit the effect of the present invention. Examples of the monomer other than the (meth)acrylic acid ester monomer include monomer compounds such as styrene and vinyl acetate.

The poly(meth)acrylic acid ester may contain the monofunctional unsaturated (meth)acrylic acid ester as a structural unit. In this case, examples of the poly(meth)acrylic acid ester include a monofunctional (meth)acrylic acid ester polymerizing material obtained by polymerizing the monofunctional unsaturated (meth)acrylic acid ester. This polymer has a nonreactive group in a side chain. In this case, the term "nonreactive" means such property of a group contained in the monofunctional unsaturated (meth)acrylic acid ester as not to participate in a polymerization reaction when the monofunctional (meth)acrylic acid ester polymerizing material is obtained.

The monofunctional (meth)acrylic acid ester polymerizing material may be either a homopolymer containing a monofunctional unsaturated (meth)acrylic acid ester, or a copolymer containing two monofunctional unsaturated (meth)acrylic acid esters. The monofunctional (meth)acrylic acid ester polymerizing material may be either a crosslinked polymer or a non-crosslinked polymer. Furthermore, when the monofunctional (meth)acrylic acid ester polymerizing material is a copolymer, the monofunctional (meth)acrylic acid ester polymerizing material may be any polymer of a random copolymer, a block copolymer, an alternating copolymer, and a graft copolymer. The monofunctional (meth)acrylic acid ester polymerizing material may contain a monomer other than the monofunctional unsaturated (meth)acrylic acid ester as a structural unit as long as the monomer other than the monofunctional unsaturated (meth)acrylic acid ester does not inhibit the effect of the present invention. Examples of the monomer other than the monofunctional unsaturated (meth)acrylic acid ester monomer include monomer compounds such as styrene and vinyl acetate.

For this reason, the (meth)acrylic resin composition (A) in the present invention preferably contains the monofunctional unsaturated (meth)acrylic acid ester and the monofunctional (meth)acrylic acid ester polymerizing material as a main component. In this case, the main component refers to a component contained in the (meth)acrylic resin composition (A).

The monofunctional (meth)acrylic acid ester polymerizing material contains the monofunctional unsaturated (meth)acrylic acid ester as a structural unit.

Examples of the monofunctional (meth)acrylic acid ester polymerizing material include polymethyl(meth)acrylate, polyethyl(meth)acrylate, polybutyl(meth)acrylate, polycyclohexyl(meth)acrylate, polyethylhexyl(meth)acrylate, and polylauryl(meth)acrylate. The exemplified (meth)acrylic acid esters may be used alone or in combination of two or more kinds.

Specifically, the (meth)acrylic resin composition (A) includes a content rate of the main component containing the monofunctional unsaturated (meth)acrylic acid ester and the monofunctional (meth)acrylic acid ester polymerizing material, and the content rate is preferably 80% by mass or more, and more preferably 90% by mass or more, based on the total amount of the (meth)acrylic resin composition (A). In this case, the content rate of the main component containing the monofunctional unsaturated (meth)acrylic acid ester and the monofunctional (meth)acrylic acid ester polymerizing material may be 100% by mass or less, based on the total amount of the (meth)acrylic resin composition (A).

Thus, when the (meth)acrylic resin composition (A) contains the main component containing the (meth)acrylic acid ester and the monofunctional (meth)acrylic acid ester polymerizing material, in an amount of 80% by mass or more based on the total amount of the (meth)acrylic resin composition (A), the transparency of the methacrylic resin composition can be secured.

On the other hand, the (meth)acrylic resin composition (A) may contain the monofunctional unsaturated (meth)acrylic acid ester among the monofunctional unsaturated (meth)acrylic acid ester and the monofunctional (meth)acrylic acid ester polymerizing material. In this case, the (meth)acrylic resin composition (A) preferably contains the monofunctional unsaturated (meth)acrylic acid ester in an amount of 30 to 95% by mass, and more preferably 60 to 85% by mass.

In this case, it is possible to reduce the possibility that the impact resistance of the cured product obtained from the (meth)acrylate resin composition is excessively lowered and the possibility that an adverse influence is imposed on curability and moldability.

The (meth)acrylic resin composition (A) may contain the monofunctional (meth)acrylic acid ester polymerizing material among the monofunctional unsaturated (meth)acrylic acid ester and the monofunctional (meth)acrylic acid ester polymerizing material. In this case, the (meth)acrylic resin composition (A) preferably contains the monofunctional (meth)acrylic acid ester polymerizing material in an amount of 5 to 70% by mass, and more preferably 15 to 40% by mass.

In this case, it is possible to suppress the rigidity of the cured product and molded body obtained from the (meth)acrylate resin composition. Thereby, even when an impact is applied to the cured product and the molded body, it is possible to suppress the breakage of the cured product and molded body.

Herein, the (meth)acrylic resin composition (A) may contain a polymerizable monomer as long as the polymerizable monomer does not inhibit the effect of the present invention. The polymerizable monomer is a compound different from the monofunctional unsaturated (meth)acrylic acid ester and the monofunctional (meth)acrylic acid ester polymerizing material. Examples of the polymerizable monomer include styrene, α-methylstyrene, vinyl acetate, and acrylamide.

When the monofunctional (meth)acrylic acid ester polymerizing material contains the polymerizable monomer, the polymerizable monomer serves as a structural unit of the monofunctional (meth)acrylic acid ester polymerizing material. The monofunctional (meth)acrylic acid ester polymerizing material may be either a crosslinked polymer or a non-crosslinked polymer. When the monofunctional (meth)acrylic acid ester polymerizing material is a copolymer, examples of the copolymer include polymers such as a random copolymer, a block copolymer, an alternating copolymer, and a graft copolymer.

When the (meth)acrylic resin composition (A) contains the polymerizable monomer as described above, it is possible to improve the polymerization reaction of the (meth)acrylic resin composition (A) with a crosslinking agent (B) described in below. That is, since the (meth)acrylic resin composition is formed to the molded body and cured product containing the polymers having a dense matrix structure among them, the polymer structure is further stabilized.

Herein, the poly(meth)acrylic acid ester can be obtained by a production method selected from various methods. Examples of the production method include, but are not particularly limited to, solution polymerization, emulsion polymerization, suspension polymerization, bulk polymerization, and dispersion polymerization.

In the present invention, the poly(meth)acrylic acid ester is preferably the monofunctional (meth)acrylic acid ester polymerizing material, and more preferably polymethyl methacrylate (hereinafter, may be abbreviated as PMMA).

As described above, when the poly(meth)acrylic acid ester is the monofunctional (meth)acrylic acid ester polymerizing material, the cured product obtained from the (meth)acrylic resin composition has excellent impact resistance, prevents the degradation of heat resistance and bending strength, and has excellent curability and moldability. Furthermore, the cured product having high transparency can be obtained.

When the poly(meth)acrylic acid ester is PMMA, the cured product obtained from the (meth)acrylate resin composition has excellent impact resistance, prevents the degradation of heat resistance and bending strength, and has excellent curability and moldability. When the poly(meth)acrylic acid ester is PMMA, the obtained cured product has high transparency.

Herein, among the aspects, the (meth)acrylic resin composition (A) preferably contains the (meth)acrylic acid ester and the poly(meth)acrylic acid ester.

In this case, the (meth)acrylic acid ester is preferably the monofunctional unsaturated (meth)acrylic acid ester, and more preferably MMA. The poly(meth)acrylic acid ester is preferably the monofunctional (meth)acrylic acid ester polymerizing material, and more preferably PMMA.

In this aspect, the (meth)acrylic acid ester is preferably contained in an amount of 30 to 95% by mass, and more preferably 60 to 85% by mass, based on the total amount of the (meth)acrylic resin composition (A). The poly(meth)acrylic acid ester is preferably contained in an amount of the 5 to 70% by mass, and more preferably 15 to 40% by mass, based on the total amount of the (meth)acrylic resin composition (A).

In this case, there is no possibility that the impact resistance of the cured product obtained from the (meth)acrylate resin composition is excessively lowered, and there is little possibility that an adverse influence is imposed on curability and moldability.

As described above, in the present invention, the (meth)acrylic resin composition (A) particularly preferably contains MMA and PMMA. When MMA and PMMA are used in combination, the cured product obtained from the (meth)acrylate resin composition has very excellent impact resistance, and suppresses the excessive decrease in bending strength. In addition, there is an advantage that the (meth)acrylate resin composition prevents the degradation of curing reactivity, weather resistance, and transparency.

Furthermore, when the (meth)acrylic acid ester and the poly(meth)acrylic acid ester are the monofunctional unsaturated (meth)acrylic acid ester and the monofunctional (meth)acrylic acid ester polymerizing material, respectively, the monofunctional unsaturated (meth)acrylic acid ester is preferably contained in an amount of 30 to 95% by mass, and more preferably 60 to 85% by mass, based on the total amount of the (meth)acrylic resin composition (A). The monofunctional (meth)acrylic acid ester polymerizing material is preferably contained in an amount of 5 to 70% by mass, and more preferably 15 to 40% by mass, based the total amount of the (meth)acrylic resin composition (A).

In this case, there is no possibility that the impact resistance of the cured product obtained from the (meth)acrylate resin composition is excessively lowered, and there is little possibility that an adverse influence is imposed on curability and moldability.

Furthermore, when the (meth)acrylic acid ester and the poly(meth)acrylic acid ester are MMA and PMMA, respectively, MMA is preferably contained in an amount of 30 to 95% by mass, and more preferably 60 to 85% by mass, based on the total amount of the (meth)acrylic resin composition (A). PMMA is preferably contained in an amount of 5 to 70% by mass, and more preferably 15 to 40% by mass, based on the total amount of the (meth)acrylic resin composition (A).

In this case, there is no possibility that the impact resistance of the cured product obtained from the (meth)acrylate resin composition is excessively lowered, and there is little possibility that an adverse influence is imposed on curability and moldability.

As described above, on the basis of the present invention, the (meth)acrylic resin composition (A) particularly preferably contains MMA and PMMA. When MMA and PMMA are used in combination, the cured product obtained from the (meth)acrylate resin composition has very excellent impact resistance, and suppresses the excessive decrease in bending strength. In addition, there is an advantage that the cured product prevents the degradation of curing reactivity, weather resistance, and transparency.

Next, the crosslinking agent (B) will be described. The crosslinking agent (B) used in the present invention contains at least the bifunctional (meth)acrylic monomer (C) represented by the following chemical formula 1. 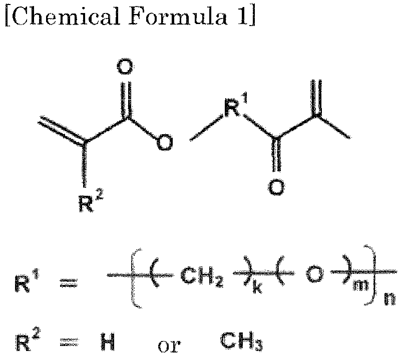 wherein n and k are each integers with n×k being 10 or more and 30 or less, and m is 0 or 1.

As represented by the chemical formula 1, the bifunctional (meth)acrylic monomer (C) is a compound having radically polymerizable double bonds at both ends through an alkylene glycol group or an alkylene group.

In the bifunctional (meth)acrylic monomer (C), the nxk value is preferably 10 to 30. Thereby, the bifunctional (meth)acrylic monomer (C) has a comparatively long spacer site (R¹ site) in a molecule. Therefore, the bifunctional (meth)acrylic monomer (C) serves as a flexible crosslinking agent. The bifunctional (meth)acrylic monomer (C) is used, and thereby flexibility can be simultaneously applied to the cured product of the (meth)acrylate resin composition while a three-dimensional crosslinked structure is formed in the cured product.

This is considered to be because the bifunctional (meth)acrylic monomer (C) expands and shrinks in the spacer site. Therefore, the cured product and molded body obtained from the (meth)acrylate resin composition are likely to absorb and relax the applied impact. As a result, the cured product and the molded body have excellent impact resistance. Since the three-dimensional crosslinked structure is formed while the flexibility is applied to the cured product, physical properties such as heat resistance and strength, for example, bending strength are also hardly lost.

In the structural formula represented by the chemical formula 1, the nxk value is more preferably 10 to 28. In this case, the (meth)acrylate resin composition can be likely to apply particularly high impact property (impact strength) to the cured product.

Specific examples of the bifunctional (meth)acrylic monomer (C) include polyalkylene glycol dimethacrylates such as polyethylene glycol dimethacrylate (k = 2, m = 1) and polypropylene glycol dimethacrylate (k = 3, m = 1), and alkylene dimethacrylates such as 1,10-decane dimethacrylate (k = 1, m = 0, n = 10). In the case of m = 0, R¹ corresponds to an alkylene chain having carbon atoms of 10 to 30. The exemplified bifunctional (meth)acrylic monomers (C) may be used alone or in combination of two or more kinds.

The blending amount of the bifunctional (meth)acrylic monomer (C) is 2 to 25 parts by mass based on 100 parts by mass of the (meth)acrylic resin composition (A).

In this case, higher impact property can be applied to the cured product and molded body obtained from the (meth)acrylic resin composition.

Specifically, when the blending amount is more than 25 parts by mass, flexibility may be excessively increased, and heat resistance and bending property may be decreased. When the blending amount is less than 2 parts by mass, impact property is not obtained.

The blending amount of the bifunctional (meth)acrylic monomer (C) is more preferably 5 to 22 parts by mass, and particularly preferably 10 to 20 parts by mass, based on 100 parts by mass of the (meth)acrylic resin composition (A).

In this case, higher impact property can be applied to the cured product and molded body obtained from the (meth)acrylic resin composition.

In the present invention, the crosslinking agent (B) may further contain the polyfunctional unsaturated ester compound (D) (excluding the chemical formula 1) containing two or more radically polymerizable functional groups.

In other words, on the basis of the present invention, the crosslinking agent (B) may further contain the polyfunctional unsaturated ester compound (D). This polyfunctional unsaturated ester compound (D) is a compound containing two or more radically polymerizable functional groups. Therefore, the polyfunctional unsaturated ester compound (D) is a compound different from the bifunctional (meth)acrylic monomer (C) represented by the chemical formula 1.

In this case, the cured product and molded body obtained from the (meth)acrylic resin composition have higher heat resistance, and prevents the degradation of strength.

Examples of the polyfunctional unsaturated ester compound (D) include trifunctional unsaturated esters such as trimethylolethanetri(meth)acrylate, trimethylolpropanetri(meth)acrylate, and tetramethylolmethanetri(meth)acrylate, and tetrafunctional unsaturated esters such as tetramethylolmethanetetra(meth)acrylate and dipropyleneglycoldi(meth)acrylate. The polyfunctional unsaturated ester compound (D) may be used alone or in combination of two or more kinds.

Herein, the exemplified polyfunctional unsaturated ester compound (D) contains three radically polymerizable functional groups, and particularly preferably three or more radically polymerizable functional groups.

In this case, the heat resistance and strength of the cured product and molded body obtained from the (meth)acrylic resin composition can be further improved, and the curing reactivity of the (meth)acrylic resin composition can also be increased.

The amount of the polyfunctional unsaturated ester compound (D) is preferably within a range of 0.1 to 5.0 parts by mass, and more preferably within a range of 3.0 to 5.0 parts by mass, based on 100 parts by mass of the (meth)acrylic resin composition (A).

When the (meth)acrylic resin composition contains the polyfunctional unsaturated ester compound (D) in this range, the moldability and heat resistance or the like of the (meth)acrylic resin composition are improved. Specifically, when the content of the polyfunctional unsaturated ester compound (D) is less than 0.1 parts by mass, the curing time of the (meth)acrylic resin composition is prolonged, and the heat resistance of the obtained cured product and molded body is also impaired, which is not preferable. When the content of the polyfunctional unsaturated ester compound (D) is more than 5.0 parts by mass, the curing rate of the (meth)acrylic resin composition becomes too fast, which causes the occurrence of appearance defects such as voids in the obtained cured product and molded body.

The crosslinking agent (B) may contain a polyfunctional vinyl aromatic compound in addition to the exemplified polyfunctional unsaturated ester compounds (D). The polyfunctional vinyl aromatic compound is a compound containing two or more radically polymerizable functional groups. Examples of the polyfunctional vinyl aromatic compound include compounds such as divinylbenzene and divinylnaphthalene. That is, the polyfunctional vinyl aromatic compound means a compound in which a plurality of vinyl groups are applied to an acene compound.

The (meth)acrylate resin composition according to the present invention may contain a polymerization initiator having radical reactivity in order to accelerate a curing reaction. The polymerization initiator is not particularly limited, and known initiators such as organic peroxides, for example, diacyl peroxides, peroxy ketals, alkyl peresters and percarbonates, and an azo compound can be used. Specific examples of the organic peroxides include benzoyl peroxide, t-butyl peroxybenzoate, lauryl peroxide, t-butyl peroxide, t-butyl peroxypivalate, t-butyl peroxy isopropylcarbonate, t-butylperoxy acetate, 2,2-t-butylperoxybutane, t-butylperoxy-3,3,5 trimethylhexanoate, di-t-butylperoxy hexahydroterephthalate, di-(3,3,5-trimethylhexanoyl)peroxide, dilauroyl peroxide, dibenzoyl peroxide, 1,1-di-(t-butylperoxy)cyclohexane, 2,2-di-(t-amyl peroxy)butane, 2,2-di-(4,4-di-t-(butylperoxy)cyclohexyl)propane, t-butylperoxy neoheptanoate, t-hexyl peroxide pivalate, t-butyl peroxide pivalate, 1,1,3,3-tetramethylbutylperoxy-2-ethyl hexanoate, peroxide disuccinate, 2,5-dimethyl-2,5-di(2-ethylhexanoylperoxy)hexane, t-hexylperoxy-2-ethyl hexanoate, di(4-methylbenzoyl)peroxide, t-amyl peroxyl-2-ethyl hexanoate, di-t-butylperoxy hexahydroterephthalate, t-amylperoxy 3,3,5-trimethylhexanoate, t-amyl peroxyisopropyl carbonate, t-butyl peroxy isopropylcarbonate, t-butylperoxy-2-ethylhexyl carbonate, 1,6-di-(t-butylperoxycarbonyloxy)hexane, t-butylperoxydiethyl acetate, 1,1'di(t-butylperoxy)-2-methylcyclohexane, 1,1-di(t-hexylperoxy)-3,3,5-trimethylcyclohexane, 1,1-di(t-hexylperoxy)cyclohexane, t-hexylperoxyisopropyl carbonate, t-butyl peroxide maleate, t-butylperoxy-3,3,5-trimethylhexanoate, t-butyl peroxy laurate, t-hexylperoxy benzoate, and 2,5-dimethyl-2,5-di(benzoylperoxy)hexane. Specific examples of the azo compound include azobisisobutyronitrile and azobisdimethyl valeronitrile.

The polymerization initiators having radical reactivity may be used alone or in combination of two or more kinds.

When the (meth)acrylic resin composition is cured by using the exemplified polymerization initiator having radical reactivity, the (meth)acrylic resin composition can be cured by irradiating the (meth)acrylic resin composition with light or ultraviolet light having predetermined intensity, or heating the (meth)acrylic resin composition at a predetermined temperature.

Herein, when the (meth)acrylic resin composition based on the present invention is heated to be cured, the 10-hr half-life temperature is not particularly limited and the 10-hr half-life temperature of the polymerization initiator contained in the (meth)acrylic resin composition may be appropriately selected according to curing reactivity or the like. The 10-hr half-life temperature is a known index, and means a temperature required for decomposing the polymerization initiator by heat to decrease the concentration of the polymerization initiator after the lapse of 10 hours to half of the initial concentration.

When the (meth)acrylic resin composition is irradiated with light or ultraviolet light to be cured, the polymerization initiator is decomposed by irradiating the (meth)acrylic resin composition with light or ultraviolet light having predetermined intensity suitable for the polymerization initiator. Thereby, the compounds contained in the (meth)acrylic resin composition are polymerized, and the (meth)acrylic resin composition is cured. Therefore, the molded body and the cured product can be obtained.

Although the blending amount of the polymerization initiator is not particularly limited, the blending amount may be 0.1 to 5 parts by mass based on 100 parts by mass of the (meth)acrylic resin composition (A), for example.

The (meth)acrylate resin composition may contain other various additive materials as long as the additive materials do not inhibit the effect of the present invention. For example, the (meth)acrylate resin composition may contain inorganic ultraviolet light shielding agents such as fillers, for example, silica fibers and silica particles, titanium oxide, zinc oxide, and cerium oxide so that the transparency is not so lower. The (meth)acrylate resin composition may contain a light stabilizer, an antioxidant, a thermal stabilizer, an antistatic agent, a heat ray reflecting material, a heat ray absorbing material, a flame retardant, a lubricant, a pigment, and a diluting solvent or the like as the additive materials.

For example, when the (meth)acrylate resin composition contains the filler, the (meth)acrylate resin composition preferably contains the filler of 10 to 200 parts by mass based on 100 parts by mass of the (meth)acrylic resin composition (A). Thus, the (meth)acrylate resin composition contains the filler, and thereby the occurrence of the voids in the molded body and cured product obtained from the (meth)acrylate resin composition can be suppressed, and the elastic modulus of the molded body and cured product can be improved. The (meth)acrylate resin composition preferably contains silica as the filler. The refractive index of the (meth)acrylate resin composition is close to that of the (meth)acrylic resin composition (A). Therefore, the elastic modulus of the molded body and cured product obtained from the (meth)acrylate resin composition can also be improved while the transparency is secured.

The (meth)acrylate resin composition based on the present invention may be prepared by blending the (meth)acrylic resin composition (A), the crosslinking agent (B) containing the bifunctional (meth)acrylic monomer (C), and other additives added if needed, which have their own predetermined amounts. For the (meth)acrylate resin composition, the poly(meth)acrylic acid ester (for example, PMMA) contained in the (meth)acrylic resin composition (A) is preferably in a state where the poly(meth)acrylic acid ester is dissolved in the (meth)acrylic acid ester (for example, MMA).

The cured product (may be referred to as the molded body) can be obtained by injecting the (meth)acrylate resin composition prepared as described above into mold forms such as a metal mold, a resin mold, and a glass mold, and heating the (meth)acrylate resin composition in a certain specific temperature range under pressure or normal pressure. A film-like molded body can also be obtained by applying the (meth)acrylate resin composition onto the mold form, and curing the (meth)acrylate resin composition by heat. A temperature for curing the (meth)acrylate resin composition by heat may be appropriately set depending on the kinds and blending amounts of raw materials. For example, the temperature may be set to 40 to 100°C. When the viscosity of the (meth)acrylate resin composition is too high in the case where the (meth)acrylate resin composition is injected into the mold form or applied onto the mold form, a viscosity modifier or the like may also be added to the (meth)acrylate resin composition.

Since the cured product (molded body) obtained as described above is formed while being crosslinked by the bifunctional (meth)acrylic monomer (C) having a suitable spacer length, the cured product can also have good flexibility while having a three-dimensional crosslinked structure. Therefore, the cured product and the molded body have excellent impact resistance. Furthermore, strength physical properties such as heat resistance and bending strength of the cured product and molded body are also maintained. Needless to say, the cured product thus obtained further has high transparency and chemical resistance or the like.

The cured product obtained from the (meth)acrylate resin composition based on the present invention may have a transmittance of 70% or more. In this case, the transmittance may be evaluated by using the cured product molded so as to have a thickness of about 5 mm.

Therefore, the molded body obtained by curing the (meth)acrylate resin composition based on the present invention can be suitably used for substitutes for glass plates such as vehicular or architectural windowpanes and covers for solar cell panels, particularly for uses requiring impact resistance.

### EXAMPLES

Hereinafter, the present invention will be specifically described with reference to Examples. However, the present invention is not limited only to these Examples.

### (Example 1)

A (meth)acrylic resin composition (A) was prepared by dissolving 30 parts by mass of polymethyl methacrylate [Chemical Formula 3] as a poly(meth)acrylic acid ester in 70 parts by mass of methyl methacrylate [Chemical Formula 2] as the (meth)acrylic acid ester. Then, 10 parts by mass of polyethylene glycol dimethacrylate (k = 2, m = 1, n = 9; manufactured by NOF Corporation) of [Chemical Formula 1] as the bifunctional (meth)acrylic monomer (C), 1.0 part by mass of trimethylolpropane trimethacrylate [Chemical Formula 4] (mentioned as "TMPT" in Table 1) as the polyfunctional unsaturated ester compound (D), and 0.3 parts by mass of di-(3,5,5-trimethylhexanoyl)peroxide (Trigonox 36-C75 manufactured by Kayaku Akzo Corporation) as the radical polymerization initiator were added to the (meth)acrylic resin composition. Furthermore, 150 parts by mass of silica (mean particle diameter: 11 µm) was added as the filler to obtain a (meth)acrylate resin composition.

The (meth)acrylate resin composition prepared as described above was poured into a metal mold, and cured at 75°C for 1 hour to obtain a cured product (molded body) of the (meth)acrylate resin composition.

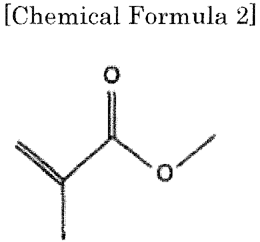

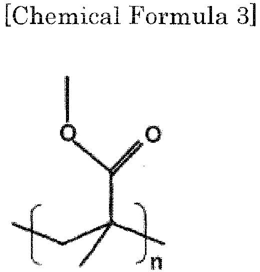

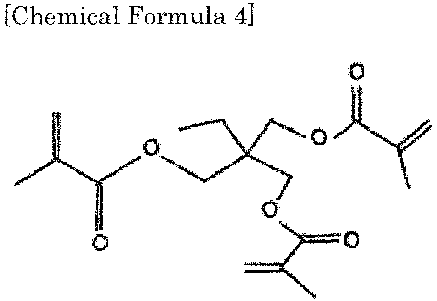

### (Example 2)

A cured product was obtained in the same manner as in Example 1 except that polyethylene glycol dimethacrylate (k = 2, m = 1, n = 6) was used as the bifunctional (meth)acrylic monomer (C) in place of polyethylene glycol dimethacrylate (k = 2, m = 1, n = 9).

### (Example 3)

A cured product was obtained in the same manner as in Example 1 except that polyethylene glycol dimethacrylate (k = 2, m = 1, n = 14) was used as the bifunctional (meth)acrylic monomer (C) in place of polyethylene glycol dimethacrylate (k = 2, m = 1, n = 9).

### (Example 4)

A cured product was obtained in the same manner as in Example 1 except that the blending amount of polyethylene glycol dimethacrylate (k = 2, m = 1, n = 9) as the bifunctional (meth)acrylic monomer (C) was set to 3 parts by mass.

### (Example 5)

A cured product was obtained in the same manner as in Example 1 except that the blending amount of polyethylene glycol dimethacrylate (k = 2, m = 1, n = 9) as the bifunctional (meth)acrylic monomer (C) was set to 20 parts by mass.

### (Example 6)

A cured product was obtained in the same manner as in Example 1 except that 1,10-decane dimethacrylate (k = 1, m = 0, n = 10) was used as the bifunctional (meth)acrylic monomer (C) in place of polyethylene glycol dimethacrylate (k = 2, m = 1, n = 9).

### (Example 7)

A cured product was obtained in the same manner as in Example 1 except that the blending amount of trimethylolpropane trimethacrylate as the polyfunctional unsaturated ester compound (D) was set to 3 parts by mass.

### (Example 8)

A cured product was obtained in the same manner as in Example 1 except that the blending amount of trimethylolpropane trimethacrylate as the polyfunctional unsaturated ester compound (D) was set to 5 parts by mass.

### (Comparative Example 1)

A cured product was obtained in the same manner as in Example 1 except that ethylene glycol dimethacrylate (k = 2, m = 1, n = 1) was used as the bifunctional (meth)acrylic monomer (C) in place of polyethylene glycol dimethacrylate (k = 2, m = 1, n = 9).

### (Comparative Example 2)

A cured product was obtained in the same manner as in Example 1 except that polytetramethylene glycol dimethacrylate (k = 4, m = 1, n = 9) was used as the bifunctional (meth)acrylic monomer (C) in place of polyethylene glycol dimethacrylate (k = 2, m = 1, n = 9).

### (Comparative Example 3)

A cured product was obtained in the same manner as in Example 1 except that the cured product was obtained without using a bifunctional (meth)acrylic monomer (C).

### (Comparative Example 4)

A cured product was obtained in the same manner as in Example 1 except that trimethylol propane triacrylate which was a polyfunctional unsaturated ester compound (D) was not blended.

### (Comparative Example 5)

A cured product was obtained in the same manner as in Example 1 except that the blending amount of trimethylolpropane trimethacrylate as the polyfunctional unsaturated ester compound (D) was set to 10 parts by mass.

### (Comparative Example 6)

A cured product was obtained in the same manner as in Example 1 except that the blending amount of polyethylene glycol dimethacrylate as the bifunctional (meth)acrylic monomer (C) was set to 40 parts by mass.

The blending conditions of Examples and Comparative Examples are shown in Table 1. In Table 1, k, m, and n values, and kxn value in the chemical formula 1 of the bifunctional (meth)acrylic monomer (C) are also shown.

### <Evaluation>

The results of evaluation on heat resistance, bending strength, and impact strength for the cured products of Examples and Comparative Examples thus obtained are shown in Table 1. The evaluations were performed as follows.

### (Heat Resistance)

The heat resistance of the obtained cured product was evaluated by a glass transition temperature. The glass transition temperature was measured in accordance with JIS K 7121 (ISO 3146: Determination of melting behaviour (melting temperature or melting range) of semi-crystalline polymers).

### (Bending Strength)

The bending strength (bending property) of the obtained cured product was measured in accordance with JIS K 7171 (ISO 178: Plastics-Determination of flexural properties).

### (Impact Strength)

The impact strength of the obtained cured product was measured in accordance with JIS K 7110 (ISO 180: Plastics-Determination of Izod impact strength).

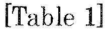

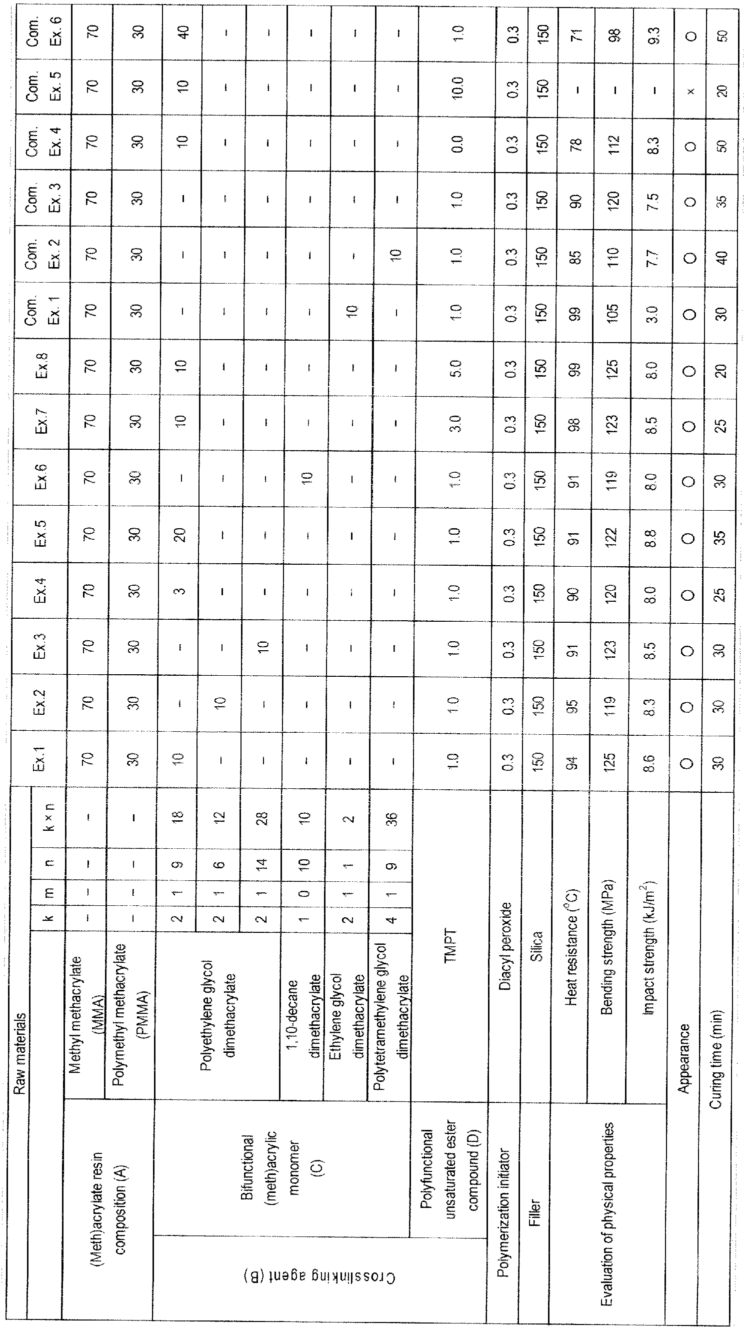

As apparent from Table 1, all the cured products of Examples 1 to 8 obtained from the (meth)acrylate resin composition of the present invention had impact resistance strength higher than that of the cured product (Comparative Example 3) obtained without using the bifunctional (meth)acrylic monomer. Simultaneously, the cured products of Example 1 to 8 had heat resistance higher than that of the cured product of Comparative Example 3, and prevented a remarkable decrease in bending strength. Therefore, it was found that the (meth)acrylate resin composition of the present invention could apply high impact property to the cured product while applying excellent heat resistance and bending property (bending strength) to the cured product.

On the other hand, it was found that when the bifunctional (meth)acrylic monomer in which the nxk value deviated from the predetermined range was used, the cured products had excellent heat resistance, as shown in Comparative Examples 1 and 2. However, it was found that the cured products did not have high impact strength.

When the polyfunctional unsaturated ester compound (D) was not blended, the cured product prevented a remarkable decrease in bending strength, as shown in Comparative Example 4. However, the cured product tended to have low heat resistance, and a curing time longer than those of Examples 1 to 8.

Furthermore, when the bifunctional (meth)acrylic monomer (C) was excessively blended while the bifunctional (meth)acrylic monomer (C) satidfied the predetermined range of the nxk value, the cured product had excellent impact strength, as shown in Comparative Example 6. However, the cured product tended to have low bending strength and heat resistance, and a curing time longer than those of Examples 1 to 8.

Furthermore, when the polyfunctional unsaturated ester compound (D) could be excessively blended, the obtained cured product was unsuitable in the present invention, as shown in Comparative Example 5.

## Claims

1. A (meth)acrylate resin composition comprising:
a (meth)acrylic resin composition (A) comprising a (meth)acrylic acid ester and a poly(meth)acrylic acid ester; and
a crosslinking agent (B) comprising a bifunctional (meth)acrylic monomer (C) represented by the following chemical formula 1 and a polyfunctional unsaturated ester compound (D) containing three or more radically polymerizable functional groups,
the bifunctional (meth)acrylic monomer (C) being comprised in an amount of 2 to 25 parts by mass and the polyfunctional unsaturated ester compound having three or more radically polymerizable functional groups being comprised in an amount of 0.1 to 5 parts by mass, based on 100 parts by mass of the (meth)acrylic resin composition (A), 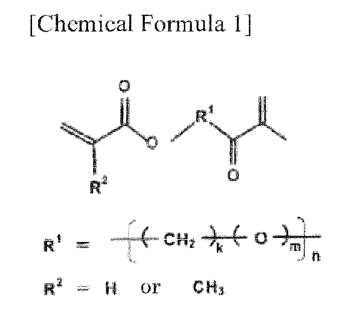 wherein n and k are each integers with nxk being 10 or more and 30 or less, and m is 0 or 1.

2. The (meth)acrylate resin composition according to claim 1, wherein the (meth)acrylic acid ester is a monofunctional unsaturated (meth)acrylic acid ester, and the poly(meth)acrylic acid ester comprises the monofunctional unsaturated (meth)acrylic acid ester as a structural unit.

3. A cured product obtained through a step of curing the (meth)acrylate resin composition according to claim 1 or 2.
